(19) Europäisches Patentamt
European Patent Office
Office européen des brevets

(11) EP 1 320 559 B1

# (12) EUROPÄISCHE PATENTSCHRIFT

(45) Veröffentlichungstag und Bekanntmachung des Hinweises auf die Patenterteilung:
**11.07.2007 Patentblatt 2007/28**

(21) Anmeldenummer: **01969741.6**

(22) Anmeldetag: **20.09.2001**

(51) Int Cl.:
***C08F 10/00*** *(2006.01)* ***B01J 8/00*** *(2006.01)*
***B01J 19/24*** *(2006.01)*

(86) Internationale Anmeldenummer:
**PCT/EP2001/010847**

(87) Internationale Veröffentlichungsnummer:
**WO 2002/026841 (04.04.2002 Gazette 2002/12)**

## (54) VERFAHREN ZUR VORAKTIVIERUNG VON KATALYSATOREN

METHOD FOR PREACTIVATING CATALYSTS

PROCEDE DE PREACTIVATION DE CATALYSEURS

(84) Benannte Vertragsstaaten:
**AT BE CH CY DE DK ES FI FR GB GR IE IT LI LU MC NL PT SE TR**

(30) Priorität: **26.09.2000 EP 10048003**

(43) Veröffentlichungstag der Anmeldung:
**25.06.2003 Patentblatt 2003/26**

(73) Patentinhaber: **Basell Poliolefine Italia S.r.l.**
**20124 Milano (IT)**

(72) Erfinder:
- **BIDELL, Wolfgang**
**1640 Rhode St Genese # Brussels (BE)**
- **ZITZMANN, Joachim**
**67133 Maxdorf (DE)**
- **LYNCH, John**
**67590 Monsheim (DE)**
- **OELZE, Jürgen**
**67071 Ludwigshafen (DE)**
- **GEBHART, Hermann**
**67459 Böhl-Iggelheim (DE)**

(74) Vertreter: **Colucci, Giuseppe et al**
**Basell Poliolefine Italia S.r.l.**
**Intellectual Property**
**P.le Privato G. Donegani, 12**
**Casella Postale 19**
**44100 Ferrara (IT)**

(56) Entgegenhaltungen:
**EP-A- 0 279 153**
**EP-A- 0 372 735**
**EP-A- 0 471 550**
**EP-A- 0 819 706**
**WO-A-00/42077**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 320 559 B1

## Beschreibung

Die vorliegende Erfindung betrifft ein Verfahren zur Voraktivierung von Katalysatoren zur Polymerisation von $C_2$-$C_{20}$-Olefinen, wobei man zunächst den Katalysator mit dem jeweiligen Monomer vermischt, danach gegebenenfalls den jeweiligen Cokatalysator hinzufügt und das dadurch erhaltene Gemisch anschlie-ßend in einem Rohrreaktor einer Voraktivierung unterwirft und schließlich den auf diese Weise voraktivierten Katalysator in den eigentlichen Polymerisationsreaktor einführt, dadurch gekennzeichnet, daß das Gemisch aus Katalysator, gegebenenfalls Cokatalysator und Monomer in Form einer turbulenten Pfropfenströmung mit einer Reynoldszahl von mindestens 2300 durch den Rohrreaktor geleitet wird.

Polymerisate von $C_2$-$C_{10}$-Olefinen können sowohl durch Flüssigphasenpolymerisation als auch durch Polymerisation in einer Aufschlämmung oder durch Gasphasenpolymerisation hergestellt werden. Da sich das entstehende feste Polymerisat leicht vom gasförmigen Reaktionsgemisch abtrennen läßt, wird in zunehmendem Maß aus der Gasphase heraus polymerisiert. Die Polymerisation wird dabei mit Hilfe eines Ziegler-Natta-Katalysatorsystems durchgeführt, welches üblicherweise aus einer titanhaltigen Feststoffkomponente, einer organischen Aluminiumverbindung und einer organischen Silanverbindung besteht (EP-B 45 977, EP-A 171 200, US-A 4 857 613, US-A 5 288 824).

Zu den Polymerisaten von $C_2$-$C_{10}$-Olefinen zählen die entsprechenden Homopolymerisate, Copolymerisate sowie sogenannte Block- oder Impactcopolymerisate. Letztere sind meist Gemische aus verschiedenen Homo - bzw. Copolymerisaten von $C_2$-$C_{10}$-Alk-1-enen, die sich vor allem durch eine gute Schlagzähigkeit auszeichnen. Sie werden gewöhnlich in sogenannten Reaktor-Kaskaden aus mindestens zwei hintereinandergeschalteten Reaktoren und oft in einem mindestens zweistufigen Prozeß hergestellt, wobei das in einem ersten Reaktor erhaltene Polymerisat in Anwesenheit von noch aktiven Ziegler-Natta-Katalysatorbestandteilen in einen zweiten Reaktor übergeführt wird, in dem diesem weitere Monomere hinzupolymerisiert werden.

Werden bei der Herstellung von Polymerisaten aus $C_2$-$C_{20}$-Olefinen Katalysatoren mit einer hohen Produktivität eingesetzt, beobachtet man insbesondere bei großtechnischen Anlagen Probleme hinsichtlich der Morphologie des erhaltenen Polymerisats, insbesondere hinsichtlich eines erhöhten Anteils an Feinstanteilen sowie hinsichtlich der Bildung von Brocken im Reaktor. Weiterhin ist bei derartigen großtechnischen Anlagen verglichen mit kleineren Anlagen häufig auch die Produktivität abgesenkt. Derartige Probleme können u.a. dadurch gelöst werden, daß man den Polymerisationskatalysator, bevor dieser in den eigentlichen Polymerisationsreaktor eingespeist wird, einer Vorpolymerisation unter milden Bedingungen unterwirft. Eine solche Vorpolymerisation kann entweder in einem absatzweisen Reaktor oder aber in einem kontinuierlich arbeitenden Rührreaktor durchgeführt werden (WO 97/33920). Weiterhin ist es möglich, die Vorpolymerisation kontinuierlich in einem Schleifenreaktor ablaufen zu lassen (WO 95/22565, EP-A 57,4821, EP-A 560312, WO 98/55519). Bei einer Vorpolymerisation in einem Schleifenreaktor kommt es häufig zu Problemen bzgl. der Lagerung und der Produktivität des vorpolymerisierten Katalysators.

Aus der WO 97/33920 ist bekannt, die bei der Vorpolymerisation auftretenden Schwierigkeiten dadurch zu lösen, daß man diese in einem sehr langen Rohrreaktor durchführt. Ein solch langer Rohrreaktor ist aber für hohe Produktivitäten mit langen Reaktorlaufzeiten nicht geeignet, da ein derartiger Rohrreaktor nur schwer regelbar ist und man dabei das Risiko nicht ausschalten kann, daß der Reaktor verstopft wird. Nach der Lehre der EP-A 279 153 läßt sich das Verstopfen eines Rohrreaktors, der zur Vorpolymerisation verwendet wird, dadurch deutlich reduzieren, daß die durchschnittliche Verweilzeit im Rohrreaktor auf weniger als 1 Minute gesenkt wird.

Der vorliegenden Erfindung lag daher die Aufgabe zugrunde, den geschilderten Nachteilen abzuhelfen und ein neues Verfahren zur Voraktivierung von Katalysatoren zur Polymerisation von $C_2$-$C_{20}$-Olefinen zu entwickeln, welches u.a. durch eine erhöhte Produktivität und Prozeßstabilität über einen möglichst langen Zeitraum gekennzeichnet ist und zu Polymerisaten mit einer verbesserten Morphologie führt.

Demgemäß wurde ein neues Verfahren zur Voraktivierung von Katalysatoren zur Polymerisation von $C_2$-$C_{20}$-Olefinen gefunden, wobei man zunächst den Katalysator mit dem jeweiligen Monomer vermischt, danach gegebenenfalls den jeweiligen Cokatalysator hinzufügt und das dadurch erhaltene Gemisch anschließend in einem Rohrreaktor einer Voraktivierung unterwirft und schließlich den auf diese Weise voraktivierten Katalysator in den eigentlichen Polymerisationsreaktor einführt, welches dadurch gekennzeichnet ist, daß das Gemisch aus Katalysator, gegebenenfalls Cokatalysator und Monomer in Form einer turbulenten Pfropfenströmung mit einer Reynoldszahl von mindesten 2300 durch den Reaktor geleitet wird.

Als $C_2$-$C_{20}$-Olefine können im erfindungsgemäßen Verfahren insbesondere $C_2$-$C_{20}$-Alk-1-ene wie Ethylen, Propylen, But-1-en, Pent-1-en, Hex-1-en, Hept-1-en oder Oct-1-en verwendet werden, wobei Ethylen, Propylen oder But-1-en bevorzugt eingesetzt werden. Weiterhin sollen unter der Bezeichnung $C_2$-$C_{20}$-Olefine insbesondere auch interne $C_4$-$C_{20}$-Olefine wie beispielsweise But-2-en oder Isopren, $C_4$-$C_{20}$-Diene wie beispielsweise 1,4-Butadien, 1,5-Hexadien, 1,9-Decadien, 5-Ethyliden-2-norbornen, 5-Methyliden-2-norbornen, weiterhin cyclische Olefine wie beispielsweise Norbornen oder $\alpha$-Pinen oder aber Triene wie beispielsweise 1,6-Diphenyl-1,3,5-hexatrien, 1,6-Di-tert.-butyl-1,3,5-hexatrien, 1,5,9-Cyclododecatrien,trans,trans-Farnesol, sowie mehrfach ungesättigte Fettsäuren oder Fettsäureester verstanden werden. Das Verfahren kommt zur Herstellung von Homopolymerisaten der $C_2$-$C_{20}$-Olefine oder von

Copolymerisaten der $C_2$-$C_{20}$-Olefine, bevorzugt mit bis zu 30 Gew.-% einpolymerisierter anderer Olefine mit bis zu 20 C-Atomen, in Betracht. Unter Copolymerisaten sollen hierbei sowohl statistische Copolymerisate als auch die sogenannten Block- oder Impactcopolymerisate verstanden werden.

In der Regel wird das erfindungsgemäße Verfahren zur Voraktivierung von Katalysatoren bei der Polymerisation in wenigstens einer Reaktionszone, häufig auch in zwei oder mehr Reaktionszonen durchgeführt, d.h. die Polymerisationsbedingungen unterscheiden sich in den Reaktionszonen soweit, daß Polymerisate mit unterschiedlichen Eigenschaften erzeugt werden. Für die Homopolymerisate oder statistischen Copolymerisate kann dies beispielsweise die Molmasse sein, d.h. zur Verbreiterung der Molmassenverteilung werden in den Reaktionszonen Polymerisate mit unterschiedlichen Molmassen hergestellt. Bevorzugt werden in den Reaktionszonen unterschiedliche Monomere bzw. Monomerzusammensetzungen polymerisiert. Dies führt dann üblicherweise zu den Block- oder Impactcopolymerisaten.

Besonders geeignet ist das erfindungsgemäße Verfahren zur Herstellung von Homopolymerisaten des Propylens oder von Copolymerisaten des Propylens mit bis zu 30 Gew. -% einpolymerisierter anderer Olefine mit bis zu 10 C-Atomen. Die Copolymerisate des Propylens sind hierbei statistische Copolymerisate oder Block- oder Impactcopolymerisate. Sofern die Copolymerisate des Propylens statistisch aufgebaut sind, enthalten sie im allgemeinen bis zu 15 Gew.-%, bevorzugt bis zu 6 Gew.-%, andere Olefine mit bis zu 10 C-Atomen, insbesondere Ethylen, But-1-en oder ein Gemisch aus Ethylen und But-1-en.

Die Block- oder Impactcopolymerisate des Propylens sind Polymerisate, bei denen man in der ersten Stufe ein Propylenhomopolymerisat oder ein statistischen Copolymerisat des Propylens mit bis zu 15 Gew.-%, bevorzugt bis zu 6 Gew.-%, anderer Olefine mit bis zu 10 C-Atomen herstellt und dann in der zweiten Stufe ein Propylen-Ethylen-Copolymerisat mit Ethylengehalten von 15 bis 99 Gew.-%, wobei das Propylen-Ethylen-Copolymerisat zusätzlich noch weitere $C_4$-$C_{10}$-Olefine enthalten kann, hinzupolymerisiert. In der Regel wird soviel des Propylen-Ethylen-Copolymerisats hinzupolymerisiert, daß das in der zweiten Stufe erzeugte Copolymerisat im Endprodukt einen Gehalt von 3 bis 90 Gew.-% aufweist.

Als einzusetzende Katalysatoren können u.a. Philipskatalysatoren auf der Basis von Chromverbindungen oder Zieglerkatalysatoren verwendet werden. Die Polymerisation kann u.a. auch mittels eines Ziegler-Natta-Katalysatorsystems durchgeführt werden. Dabei werden insbesondere solche Katalysatorsysteme verwendet, die neben einer titanhaltigen Feststoffkomponente a) noch Cokatalysatoren in Form von organischen Aluminiumverbindungen b) und Elektronendonorverbindungen c) aufweisen.

Im erfindungsgemäßen Verfahren können aber auch als Katalysatoren Ziegler-Natta-Katalysatorsysteme auf der Basis von Metallocenverbindungen bzw. auf der Basis von polymerisationsaktiven Metallkomplexen eingesetzt werden.

Zur Herstellung der titanhaltigen Feststoffkomponente a) werden als Titanverbindungen im allgemeinen die Halogenide oder Alkoholate des drei- oder vierwertigen Titans verwendet, wobei auch Titanalkoxyhalogenverbindungen oder Mischungen verschiedener Titanverbindungen in Betracht kommen. Bevorzugt werden die Titanverbindungen eingesetzt, die als Halogen Chlor enthalten. Ebenfalls bevorzugt sind die Titanhalogenide, die neben Titan nur Halogen enthalten, und hierbei vor allem die Titanchloride und insbesondere Titantetrachlorid.

Die titanhaltige Feststoffkomponente a) enthält vorzugsweise mindestens eine halogenhaltige Magnesiumverbindung. Als Halogene werden hierbei Chlor, Brom, Jod oder Fluor verstanden, wobei Brom oder insbesondere Chlor bevorzugt sind. Die halogenhaltigen Magnesiumverbindungen werden entweder bei der Herstellung der titanhaltige Feststoffkomponente a) direkt eingesetzt oder bei deren Herstellung gebildet. Als Magnesiumverbindungen, die sich zur Herstellung der titanhaltige Feststoffkomponente a) eignen, kommen vor allem die Magnesiumhalogenide, wie insbesondere Magnesiumdichlorid oder Magnesiumdibromid, oder Magnesiumverbindungen, aus denen die Halogenide in üblicher Weise z.B. durch Um-' setzung mit Halogenierungsmitteln erhalten werden können wie Magnesiumalkyle, Magnesiumaryle, Magnesiumalkoxy- oder-Magnesiumaryloxyverbindungen oder Grignardverbindungen in Betracht., Bevorzugte Beispiele für halogenfreie Verbindungen des Magnesiums, die zur Herstellung der titanhaltige Feststoffkomponente a) geeignet sind, sind n-Butylethylmagnesium oder n-Butyloctylmagnesium. Bevorzugte Halogenierungsmittel sind Chlor oder Chlorwasserstoff. Es können jedoch auch die Titanhalogenide als Halogenierungsmittel dienen.

Darüber hinaus enthält die titanhaltige Feststoffkomponente a) zweckmäßigerweise Elektronendonorverbindungen, beispielsweise mono- oder polyfunktionelle Carbonsäuren, Carbonsäureanhydride oder Carbonsäureester, ferner Ketone, Ether, Alkohole, Lactone oder phosphor- oder siliciumorganische Verbindungen.

Bevorzugt werden als Elektronendonorverbindungen innerhalb der titanhaltigen Feststoffkomponente Carbonsäurederivate und insbesondere Phthalsäurederivate der allgemeinen Formel (II)

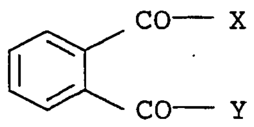

(II)

verwendet, wobei X und Y jeweils für ein Chlor- oder Bromatom oder einen $C_1$-$C_{10}$-Alkoxyrest oder gemeinsam für Sauerstoff in Anhydridfunktion stehen. Besonders bevorzugte Elektronendonorverbindungen sind Phthalsäureester, wobei X und Y einen $C_1$-$C_8$-Alkoxyrest bedeuten. Beispiele für vorzugsweise eingesetzte Phthalsäureester sind Diethylphthalat, Di-n-butylphthalat, Di-isobutylphthalat, Di-n-pentylphthalat; Di-n-hexylphthalat, Di-n-heptylphthalat, Di-n-octylphthalat oder Di-2-ethylhexylphthalat.

Weiter bevorzugte Elektronendonorverbindungen innerhalb der titanhaltigen Feststoffkomponente sind Diester von 3- oder 4-gliedrigen, gegebenenfalls substituierten Cycloalkyl-1,2-dicarbonsäuren, sowie Monoester von substituierten Benzophenon-2-carbonsäuren oder substituierten Benzophenon-2-carbonsäuren. Als Hydroxyverbindungen werden bei diesen Estern die bei Veresterungsreaktionen üblichen Alkanole verwendet, beispielsweise $C_1$-$C_{15}$-Alkanole oder $C_5$-$C_7$-Cycloalkanole, die ihrerseits eine oder mehrere $C_1$-$C_{10}$-Alkylgruppen tragen können, ferner $C_6$-$C_{10}$-Phenole.

Es können auch Mischungen verschiedener Elektronendonorverbin-dungen verwendet werden.

Bei der Herstellung der titanhaltigen Feststoffkomponente a) werden in der Regel pro Mol der Magnesiumverbindung von 0,05 bis 2,0 mol, bevorzugt von 0,2 bis 1,0 mol, der Elektronendonorverbindungen eingesetzt.

Darüber hinaus kann die titanhaltige Feststoffkomponente a) anorganische Oxide als Träger enthalten. Es wird in der Regel ein feinteiliges anorganisches Oxid als Träger verwendet, welches einen mittleren Teilchendurchmesser von 5 bis 200 μm, bevorzugt von 20 bis 70 μm, aufweist. Unter dem mittleren Teilchendurchmesser ist hierbei der volumenbezogene Mittelwert (Medianwert) der durch Coulter-Counter-Analyse bestimmten Korngrößenverteilung zu verstehen.

Vorzugsweise sind die Körner des feinteiligen anorganischen Oxids aus Primärpartikeln zusammengesetzt, die einen mittleren Teilchendurchmesser der Primärpartikel von 1 bis 20 μm, insbesondere von 1 bis 5 μm aufweisen. Bei den sogenannten Primärpartikeln handelt es sich um poröse, granuläre Oxidpartikel, welche im allgemeinen durch Mahlung aus einem Hydrogel des anorganischen Oxids erhalten werden. Es ist auch möglich, die Primärpartikeln vor ihrer Weiterverarbeitung zu sieben.

Weiterhin ist das bevorzugt zu verwendende anorganische Oxid auch dadurch charakterisiert, daß es Hohlräume bzw. Kanäle mit einem mittleren Durchmesser von 0,1 bis 20 μm, insbesondere von 1 bis 15 μm, aufweist, deren makroskopischer Volumenanteil am Gesamtpartikel im Bereich von 5 bis 30 %, insbesondere im Bereich von 10 bis 30 %, liegt.

Die Bestimmung der mittleren Teilchendurchmesser der Primärpartikel sowie des makroskopischen Volumenanteils der Hohlräume und Kanäle des anorganischen Oxids erfolgt zweckmäßigerweise durch Bildanalyse mit Hilfe der Scanning Electron Mikroscopy (Rasterelektronenmikroskopie) bzw. der Electron Probe Micro Analysis (Elektronenstrahl-Mikrobereichsanalyse) jeweils an Kornoberflächen und an Kornquerschnitten des.anorganischen Oxids. Die erhaltenen Aufnahmen werden ausgewertet und daraus die mitt-leren Teilchendurchmesser der Primärpartikel sowie der makroskopische Volumenanteil der Hohlräume und Kanäle bestimmt. Die Bildanalyse erfolgt vorzugsweise durch Überführung des elektronenmikroskopischen Datenmaterials in ein Grauwert-Binärbild und die digitale Auswertung mittels einer geeigneten EDV-Programms, z.B. des Software-Pakets Analysis der Fa. SIS.

Das bevorzugt zu verwendende anorganische Oxid kann beispielsweise durch Sprühtrockenen des vermahlenen Hydrogels, welches hierzu mit Wasser oder einem aliphatischen Alkohol vermischt wird, erhalten werden. Solche feinteiligen anorganischen Oxide sind auch im Handel erhältlich.

Das feinteilige anorganische Oxid weist ferner üblicherweise ein Porenvolumen von 0,1 bis 10 $cm^3$/g, bevorzugt von 1, 0 bis 4,0 $cm^3$/g, und eine spezifische Oberfläche von 10 bis 1000 $m^2$/g, bevorzugt von 100 bis 500 $m^2$/g, auf, wobei hier die durch Quecksilber-Porosimetrie nach DIN 66133 und durch Stickstoff-Adsorption nach DIN 66131 bestimmten Werte zu verstehen sind.

Es ist auch möglich ein anorganisches Oxid einzusetzen, dessen pH-Wert, d.h. der negative dekadische Logarithmus der Protonenkonzentration, im Bereich von 1 bis 6,5 und insbesondere im Bereich von 2 bis 6, liegt.

Als anorganische Oxide kommen vor allem die Oxide des Siliciums, des Aluminiums, des Titans oder eines der Metalle der I. bzw. der II. Hauptgruppe des Periodensystems in Betracht. Als besonders bevorzugtes Oxid wird neben Aluminiumoxid oder Magnesiumoxid oder einem Schichtsilikat vor allem Siliciumoxid (Kieselgel) verwendet. Es können auch Mischoxide wie Aluminiumsilikate oder Magnesiumsilikate eingesetzt werden.

Die als Träger eingesetzten anorganischen Oxide enthalten auf ihrer Oberfläche Wasser. Dieses Wasser ist zum Teil physikalisch durch Adsorption und zum Teil chemisch in Form von Hydroxylgruppen gebunden. Durch thermische oder chemische Behandlung kann der Wassergehalt des anorganischen Oxids reduziert oder ganz beseitigt werden, wobei in der Regel bei einer chemischen Behandlung übliche Trocknungsmittel wie $SiCl_4$, Chlorsilane oder Aluminiumalkyle zum Einsatz kommen. Der Wassergehalt geeigneter anorganischer Oxide beträgt'von 0 bis 6 Gew.-%. Vorzugsweise wird ein anorganische Oxid in der Form, wie es im Handel erhältlich ist, ohne weitere Behandlung eingesetzt.

Die Magnesiumverbindung und das anorganische Oxid liegen innerhalb der titanhaltigen Feststoffkomponente a) bevorzugt in solchen Mengen vor, daß pro Mol des anorganischen Oxids von 0,1 bis 1,0 mol, insbesondere von 0,2 bis 0,5 mol der Verbindung des Magnesiums vorhanden sind.

Bei der Herstellung der titanhaltigen Feststoffkomponente

a) kommen in der Regel ferner $C_1$- bis $C_8$-Alkanole wie Methanol, Ethanol, n-Propanol, Isopropanol, n-Butanol, sek.-Butanol, tert.-Butanol, Isobutanol, n-Hexanol, n-Heptanol, n-Oktanol oder 2-Ethylhexanol oder deren Mischungen zum Einsatz. Bevorzugt wird Ethanol verwendet.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066, der US-A 4 857 613 und der US-A 5 288 824 beschrieben. Bevorzugt wird das aus der DE-A 195 29 240 bekannte Verfahren angewandt.

Geeignete Aluminiumverbindungen b) sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Die Alkylgruppen können gleich oder voneinander verschieden sein. Es kommen lineare oder verzweigte Alkylgruppen in Betracht. Bevorzugt werden Trialkylaluminium-verbindungen verwendet, deren Alkylgruppen jeweils 1 bis 8 C-Atome aufweisen, beispielsweise Trimethylaluminium, Triethylaluminium, Tri-iso-butylaluminium, Trioctylaluminium oder Methyldiethylaluminium oder Mischungen daraus.

Neben der Aluminiumverbindung b) verwendet man in der Regel als weiteren Cokatalysator Elektronendonorverbindungen c) wie mono- oder polyfunktionelle Carbonsäuren, Carbonsäureanhydride oder Carbonsäureester, ferner Ketone, Ether, Alkohole, Lactone, sowie phosphor- und siliciumorganische Verbindungen, wobei die Elektronendonorverbindungen c) gleich oder verschieden von den zur Herstellung der titanhaltige Feststoffkomponente a) eingesetzten Elektronendonorverbindungen sein können. Bevorzugte Elektronendonorverbindungen sind dabei siliciumorganische Verbindungen der allgemeinen Formel (I)

$$R^1_nSi\ (OR^2)_{4-n} \qquad (I)$$

wobei $R^1$ gleich oder verschieden ist und eine $C_1$-$C_{20}$-Alkylgruppe, eine 5- bis 7-gliedrige Cycloalkylgruppe, die ihrerseits durch $C_1$-$C_{10}$-Alkyl substituiert sein kann, eine $C_6$-$C_{18}$-Arylgruppe oder eine $C_6$-$C_{18}$-Aryl-$C_1$-$C_{10}$-alkylgruppe bedeutet, $R^2$ gleich oder verschieden ist und eine $C_1$-$C_{20}$-Alkylgruppe bezeichnet und n für die ganzen Zahlen 1, 2 oder 3 steht. Besonders bevorzugt werden solche Verbindungen, in denen $R^1$ eine $C_1$-$C_8$-Alkylgruppe oder eine 5- bis 7-gliedrige Cycloalkylgruppe sowie $R^2$ eine $C_1$-$C_4$-Alkylgruppe bedeutet und n für die Zahlen 1 oder 2 steht.

Unter diesen Verbindungen sind insbesondere Dimethoxydiisopropylsilan, Dimethoxyisobutylisopropylsilan, Dimethoxydiisobutylsilan, Dimethoxydicyclopentylsilan, Dimethoxyisopropyl-tert-butylsilan, Dimethoxyisobuty-sek.-butylsilan und Dimethoxyisopropyl-sek.-butylsilan hervorzuheben.

Bevorzugt werden die Cokatalysatoren b) und c) in einer solchen Menge eingesetzt, daß das Atomverhältnis zwischen Aluminium aus der Aluminiumverbindung b) und Titan aus der titanhaltigen Feststoffkomponente a) von 10: 1 bis 800:1, insbesondere von 20:1 bis 200:1 beträgt und das Molverhältnis zwischen der Aluminiumverbindung b) und der Elektronendonorverbindung c) von 1:1 bis 250:1, insbesondere von 10:1 bis 80:1, beträgt.

Die titanhaltige Feststoffkomponente a), die Aluminiumverbindung b) und die in der Regel verwendete Elektronendonorverbindung c) bilden zusammen das Ziegler-Natta-Katalysatorsystem. Die Katalysatorbestandteile b) und c) können zusammen mit der titanhaltigen Feststoffkomponente a) oder als Gemisch oder auch in beliebiger Reihenfolge einzeln in den Rohrreaktor eingebracht werden und dort der Voraktivierung unterworfen werden.

Im erfindungsgemäßen Verfahren können auch Ziegler-Natta-Katalysatorsysteme auf Basis von Metallocenverbindungen bzw. auf der Basis von polymerisationsaktiven Metallkomplexen verwendet werden .

Unter Metallocenen sollen hier Komplexverbindungen aus Metallen von Nebengruppen des Periodensystems mit organischen Liganden verstanden werden, die zusammen mit metalloceniumionenbildenden Verbindungen wirksame Katalysatorsysteme ergeben. Für einen Einsatz im erfindungsgemäßen Verfahren liegen die Metallocenkomplexe im Katalysatorsystem in der Regel geträgert vor. Als Träger werden häufig anorganische Oxide eingesetzt. Bevorzugt sind die oben beschriebenen anorganischen Oxide, die auch zur Herstellung der titanhaltigen Feststoffkomponente a) verwendet werden.

Üblicherweise eingesetzte Metallocene enthalten als Zentralatome Titan, Zirkonium oder Hafnium, wobei Zirkonium bevorzugt ist. Im allgemeinen ist das Zentralatom über eine π-Bindung an mindestens eine, in der Regel substituierte, Cyclopentadienylgruppe sowie an weitere Substituenten gebunden. Die weiteren Substituenten können Halogene, Wasserstoff oder organische Reste sein, wobei Fluor, Chlor, Brom, oder Jod oder eine $C_1$-$C_{10}$-Alkylgruppe bevorzugt sind.

Bevorzugte Metallocene enthalten Zentralatome, die über zwei π-Bindungen an zwei substituierte Cyclopentadienylgruppen gebunden sind, wobei diejenigen besonders bevorzugt sind, in denen Substituenten der Cyclopentadienylgruppen an beide Cyclopentadienylgruppen gebunden sind. Insbesondere sind Komplexe bevorzugt, deren Cyclopentadienylgruppen zusätzlich durch cyclische Gruppen an zwei benachbarten C-Atomen substituiert sind.

Bevorzugte Metallocene sind auch solche, die nur eine Cyclopentadienylgruppe enthalten, die jedoch mit einen Rest substituiert ist, der auch an das Zentralatom gebunden ist.

Geeignete Metallocenverbindungen sind beispielsweise
Ethylenbis(indenyl)-zirkoniumdichlorid,
Ethylenbis(tetrahydroindenyl)-zirkoniumdichlorid,
Diphenylmethylen-9-fluorenylcyclopentadienylzirkoniumdichlorid,
Dimethylsilandiylbis(-3-tert.butyl-5-methylcyclopentadienyl)-zirkoniumdichlorid,
Dimethylsilandiylbis(-2-methylindenyl)-zirkoniumdichlorid,
Dimethylsilandiylbis(-2-methylbenzindenyl)-zirkoniumdichlorid Dimethylsilandiylbis(-2-methyl-4-phenylindenyl)zirkoniumdichlorid,
Dimethylsilandiylbis(-2-methyl-4-naphthylindenyl)zirkoniumdichlorid,
Dimethylsilandiylbis(-2-methyl-4-isopropylindenyl)zirkoniumdichlorid oder
Dimethylsilandiylbis(-2-methyl-4,6-diisopropylindenyl)zirkoniumdichlorid sowie die entsprechenden Dimethylzirkoniumverbindungen.

Die Metallocenverbindungen sind entweder bekannt oder nach an sich bekannten Methoden erhältlich.

Weiterhin enthalten die Metallocen-Katalysatorsysteme metalloceniumionenbildende Verbindungen. Geeignet sind starke, neutrale Lewissäuren, ionische Verbindungen mit lewissauren Kationen oder ionische Verbindungen mit Brönsted-Säuren als Kation. Beispiele sind hierfür Tris(pentafluorphenyl)boran, Tetrakis(pentafluorophenyl)borat oder Salze des N,N-Dimethylaniliniums. Ebenfalls geeignet als metalloceniumionenbildende Verbindungen sind offenkettige oder cyclische Alumoxanverbindungen. Diese werden üblicherweise durch Umsetzung von Trialkylaluminium mit Wasser hergestellt und liegen in der Regel als Gemische unterschiedlich langer, sowohl linearer als auch cyclischer Kettenmoleküle vor.

Darüber hinaus können die Metallocen-Katalysatorsysteme metallorganische Verbindungen der Metalle der I., II. oder III. Hauptgruppe des Periodensystems enthalten wie n-Butyl-Lithium, n-Butyl-n-octyl-Magnesium oder Tri-isobutyl-aluminium, Triethylaluminium oder Trimethylaluminium.

Das erfindungsgemäße Verfahren kann zur Voraktivierung von solchen Katalysatoren verwendet werden, die bei der Polymerisation von $C_2$-$C_{20}$-Olefinen eingesetzt werden. Die Polymerisation kann dabei in wenigstens einer, häufig auch in zwei oder noch mehr hintereinandergeschalteten Reaktionszonen (Reaktorkaskade) in der Gasphase, in der Flüssigphase, in der Slurryphase oder aber in der Bulkphase durchgeführt werden. Die Reaktionsbedingungen können bei der eigentlichen Polymerisation auch so eingestellt werden, daß die jeweiligen Monomere in zwei unterschiedlichen Phasen vorliegen, beispielsweise teils in flüssigem und teils in gasförmigen Zustand (condensed mode).

Es können die üblichen, für die Polymerisation von $C_2$-$C_{20}$-Olefinen verwendeten Reaktoren eingesetzt werden. Geeignete Reaktoren sind u.a. kontinuierlich betriebene horizontale oder vertikale Rührkessel, Umlaufreaktoren, Schleifenreaktoren, Stufenreaktoren oder Wirbelbettreaktoren. Die Größe der Reaktoren ist für das erfindungsgemäße Verfahren nicht von wesentlicher Bedeutung. Sie richtet sich nach dem Ausstoß, der in der oder in den einzelnen Reaktionszonen erzielt werden soll.

Als Reaktoren werden insbesondere Wirbelbettreaktoren sowie horizontal oder vertikal gerührte Pulverbettreaktoren verwendet. Das Reaktionsbett besteht im erfindungsgemäßen Verfahren im allgemeinen aus dem Polymerisat aus $C_2$-$C_{20}$-Olefinen, das im jeweiligen Reaktor polymerisiert wird.

In einer besonders bevorzugten Ausführungsform des erfindungsgemäßen Verfahrens wird die Polymerisation in einem Reaktor oder in einer Kaskade aus hintereinander geschalteten Reaktoren durchgeführt, in denen das pulverförmige Reaktionsbett durch einen vertikalen Rührer in Bewegung gehalten wird, wobei sich sogenannte frei tragende Wendelrührer besonders gut eignen. Derartige Rührer sind u.a. aus der EP-B 000 512 und der EP-B 031 417 bekannt. Sie zeichnen sich insbesondere dadurch aus, daß sie das pulverförmige Reaktionsbett sehr homogen verteilen. Beispiele für solche pulverförmigen Reaktionsbette sind in der EP-B 038 478 beschrieben. Vorzugsweise besteht die Reaktorkaskade aus zwei hintereinander geschalteten, kesselförmigen, mit einem Rührer versehenen Reaktoren mit einem Rauminhalt von 0,1 bis 100 $m^3$, beispielsweise 12,5, 25, 50 oder 75 $m^3$.

Nach dem erfindungsgemäßen Verfahren zur Voraktivierung von Katalysatoren zur Polymerisation von $C_2$-$C_{20}$-Olefinen vermischt man zunächst den Katalysator mit dem jeweiligen Monomer, fügt danach gegebenenfalls den jeweiligen Cokatalysator hinzu und unterwirft das dadurch erhaltene Gemisch danach einer Voraktivierung in einem Rohrreaktor. Im Falle der Polymerisation mit Hilfe von Ziegler-Natta-Katalysatorsystemen bedeutet dies, daß man zunächst die titanhaltige Feststoffkomponente a) mit dem jeweiligen Monomeren vermischt und danach gegebenenfalls als Cokatalysatoren organische Aluminiumverbindungen b) und Elektronendonorverbindungen c) hinzufügt. Bei Metallocenkatalysatoren wird nach dem erfindungsgemäßen Verfahren zunächst die Komplexverbindung aus Metallen von Nebengruppen des Periodensystems mit organischen Liganden mit dem,jeweiligen Monomeren vermischt und anschließend fügt man gegebenenfalls dem erhaltenen Gemisch als Cokatalysatoren beispielsweise Alumoxanverbindungen hinzu. Falls ein Polymerisationskatalysator keinen Cokatalysator benötigt, kann der entsprechende Verfahrensschritt selbstverständlich auch ausgelassen werden.

Im Anschluß daran unterwirft man das erhaltende Gemisch in einem Rohrreaktor einer Voraktivierung, vorzugsweise bei Temperaturen von -25 bis 150°C, insbesondere von -15 bis 100°C, Drücken von $10^5$ bis $10^7$ Pa (1 bis 100 bar), insbesondere von $10^6$ bis $6.10^6$ Pa (10 bis 60 bar) und mittleren Verweilzeiten des Reaktionsgemisches von 1 bis 5 Minuten, insbesondere von 1 bis 3 Minuten. Dabei kann es sich auch empfehlen, durch Zugabe von geeigneten Cokatalysatoren im Rohrreaktor eine Vorpolymerisation der mitgeführten Monomeren durchzuführen.

Die im erfindungsgemäßen Verfahren zur Voraktivierung eingesetzten Rohrreaktoren weisen vorzugsweise ein Längen/Durchmesser-Verhältnis von 50000:1 bis 50:1, insbesondere von 10000:1 bis 100:1 auf. Als Rohrreaktoren können die in der Kunststofftechnik üblichen Rohrreaktoren verwendet werden, beispielsweise endlos verschweißte $V_{2A}$-Stahlrohre oder aber verschweißbare $V_{2A}$-Stahlrohrteilstücke. Insbesondere bei sehr reaktiven Katalysatoren kann es sich empfehlen, einen solchen Rohrreaktor zu verwenden, der im Innern ein glattes, endloses Inletrohr ohne Nähte aufweist. Als Material für ein solches Inletrohr eignet sich u.a. Kunststoff, Metall, Graphit oder Keramik, insbesondere Teflon oder mit Keramik dotiertes Teflon. Mit einem solchen Inletrohr kann u.a. eine Belagsbildung an der Rohrwand verhindert werden. Weiterhin kann der Rohrreaktor an verschiedenen Stellen mit einer Zudosiervorrichtung versehen werden, um beispielsweise zusätzlich Monomere, Katalysatoren, Cokatalysatoren oder Zusatzstoffe einzuspeisen.

Beim erfindungsgemäßen Verfahren ist es dabei wesentlich" daß das Gemisch aus Katalysator, gegebenenfalls Cokatalysator und Monomer in Form einer turbulenten Pfropfenströmung mit einer Reynoldszahl von mindestens 2300, insbesondere von mindestens 5000, bezogen auf reines Propylen, durch den Rohrreaktor geleitet und dort voraktiviert wird. Bei der Reynoldszahl handelt es sich um eine kennzeichnende Größe für den Verlauf von Strömungsvorgängen in Rohrleitungen, in dem sie das Verhältnis von Trägheits- zu Reibungskräften in strömenden Flüssigkeiten nach folgender Gleichung (III) definiert:

$$RE = \frac{2R \cdot \nu \cdot \varsigma}{\eta} \qquad (III)$$

In der Gleichung (III) bedeuten dabei

R: den Halbmesser des durchströmenden Rohres
ν: die mittlere Strömungsgeschwindigkeit
ζ: die Dichte der zu messenden Flüssigkeit sowie
η: die dynamische Viskosität der zu messenden Flüssigkeit.

Um Blockaden im Rohrreaktor zu vermeiden, kann es sich weiterhin empfehlen, den Katalysator sowie gegebenenfalls den Cokatalysator über eine geeignete Homogenisierungseinheit in den Rohrreaktor einzubringen, um jederzeit eine homogene Katalysatorkonzentration und damit eine kontrollierte Wärmeabfuhr während der Voraktivierung zu gewährleisten. Geeignete Homogenisierungseinheiten sind u.a Gegenstromdüsen, Axialmischer, Laminarströmungsmischer, Statikmischer sowie sonstige übliche technische Mischer. Je nach verwendetem Katalysator kann die Temperatur des eingesetzten Monomeren sowie des entsprechenden Gasgemisches ebenfalls variiert werden. Die Homogenisierungseinheit kann zur Erzielung einer glatten Oberfläche im Inneren noch mit einem Inlet aus Metall, Kunststoff oder Keramik beschichtet sein, wobei Kunststoffinlets bevorzugt sind. Weiterhin kann eine vorgeschaltete Katalysatordosiervorrichtung verwendet werden, u.a. eine in der Polymerisation von Olefinen übliche Dosiervorrichtung wie beispielsweise einen Dimple-Feeder, einen Double-Check-Feeder oder Dosierpumpen. Hierbei kann der Katalysator u.a. als Feststoff oder aber als Suspension beispielsweise in flüssigem Monomer oder aber in Kohlenwasserstoffen wie u.a. in Heptan oder iso-Dodecan eingesetzt werden.

Nach dem erfindungsgemäßen Verfahren führt man den voraktivierten Katalysator anschließend in den entsprechenden Polymerisationsreaktor ein, wo dann die eigentliche Polymerisation der $C_2$-$C_{20}$-Olefine erfolgt.

Im erfindungsgemäßen Verfahren wird die eigentliche Polymerisation unter üblichen Reaktionsbedingungen bei Temperaturen von 40 bis 150°C und Drücken von 1 bis 100 bar vorgenommen. Bevorzugt sind Temperaturen von 40 bis 120°C, insbesondere von 60 bis 100°C und Drücke von $10^6$ bis $5.10^6$ Pa (10 bis 50 bar), insbesondere von 20

bis 40 bar. Die Molmasse der gebildeten Polymerisate der $C_2$-$C_{20}$-Olefine kann durch die Zugabe von in der Polymerisationstechnik üblichen Reglern, beispielsweise von Wasserstoff, kontrolliert und eingestellt werden. Neben Reglern können auch sogenannte Regulatoren, d.h. Verbindungen, die die Katalysatoraktivität beeinflussen, oder auch Antistatika eingesetzt werden. Letztere verhindern die Belagbildung an der Reaktorwand durch elektrostatische Aufladung. Die Polymerisate der $C_2$-$C_{20}$-Olefine weisen in der Regel eine Schmelze-Fließrate (MFR) von 0,1 bis 3000 g/10 min., insbesondere von 0,2 bis 100 g/10 min, bei 230°C und unter einem Gewicht von 2,16 kg, auf. Die Schmelze-Fließrate entspricht dabei der Menge an Polymerisat, die innerhalb von 10 Minuten aus der nach ISO 1133 genormten Prüfvorrichtung bei einer Temperatur von 230°C und unter einem Gewicht von 2,16 kg ausgepreßt wird. Besonders bevorzugt sind dabei solche Polymerisate, deren Schmelze-Fließrate 5 bis 50 g/10 min, bei 230°C und unter einem Gewicht von 2,16 kg, beträgt.

Beim erfindungsgemäßen Verfahren liegen die mittleren Verweilzeiten bei der eigentlichen Polymerisation der $C_2$-$C_{20}$-Olefine im Bereich von 0,1 bis 10 Stunden, bevorzugt im Bereich von 0,2 bis 5 Stunden und insbesondere im Bereich von 0,3 bis 4 Stunden.

Nach einer Ausgestaltung des erfindungsgemäßen Verfahrens zur Voraktivierung von Katalysatoren ist es auch möglich, die Dosierung von Monomer, Katalysator, gegebenenfalls Cokatalysator sowie von Hilfsstoffen, beispielsweise von Wasserstoff, sowohl in den Rohrreaktor als auch zusätzlich in den eigentlichen Polymerisationsreaktor vorzunehmen. Auf diese Weise ist es möglich, das Verfahren an verschiedenen Stellen zu kontrollieren.

Mit Hilfe des erfindungsgemäßen Verfahrens zur Voraktivierung von Katalysatoren zur Polymerisation von $C_2$-$C_{20}$-Olefine ist es u.a. möglich, die Reaktorstabilität, die Raum/Zeit-Ausbeute und die Produktivität der Polymerisationsprozesse zu verbessern. Weiterhin läßt sich die Polymerisation der $C_2$-$C_{20}$-Olefine durch die erweiterten Dosiermöglichkeiten von Monomeren, Katalysator, gegebenenfalls Cokatalysator und Regler deutlich besser kontrollieren. Darüber hinaus beobachtet man eine Verringerung der Belags- und Brockenbildung im Polymerisationsreaktor sowie eine deutliche Verbesserung der Morphologie der erhaltenen Polymerisate von $C_2$-$C_{20}$-Olefinen infolge Reduktion des Feinststaubanteils und einer engeren Partikelgrößenverteilung. Die erhaltenen Polymerisate von $C_2$-$C_{20}$-Olefine zeigen ferner eine bessere Produkthomogenität. Das erfindungsgemäße Verfahren ist technisch ohne großen Aufwand kostengünstig durchführbar und leicht zu regeln.

Das erfindungsgemäße Verfahren kann in der volgenden Vorrichtung durchgeführt werden. Dies besteht u.a. aus Zufuhreinrichtungen zur Zudosierung des Katalysators, gegebenenfalls des Cokatalysators und des Monomeren, gegebenenfalls einer sich daran anschließenden Homogenisierungseinrichtung, gegebenenfalls einer weiteren Zufuhreinrichtung für den Cokatalysator und damit verbunden, einem Rohrreaktor, dessen Austrag mit einem Polymerisationsreaktor verbunden ist. Die Vorrichtung kann auch in der Weise ausgestaltet sein, daß sich am Polymerisationsreaktor weitere Zufuhreinrichtungen für Monomere, Katalysatoren, gegebenenfalls Cokatalysatoren sowie Hilfsstoffe befinden. Weiterhin kann im Rohrreaktor ein glattes endloses Inletrohr ohne Nähte enthalten sein.

Mittels des erfindungsgemäßen Verfahrens können verschiedene Arten von Polymerisaten von $C_2$-$C_{20}$-Olefinen hergestellt werden, beispielsweise Homopolymerisate, Copolymerisate oder Gemische aus derartigen Polymerisaten. Diese eignen sich vor allem zur Herstellung von Folien, Fasern oder Formkörpern.

Beispiele

Bei den Versuchen der Beispiele 1, 2 und dem Vergleichsbeispiel A wurde ein Ziegler-Natta-Katalysatorsystem eingesetzt, das eine nach folgendem Verfahren hergestellte titanhaltige Feststoffkomponente a) enthielt.

In einer ersten Stufe wurde ein feinteiliges Kieselgel, das einen mittleren Teilchendurchmesser von 30 μm, ein Porenvolumen von 1,5 $cm^3$/g und eine spezifische Oberfläche von 260 $m^2$/g aufwies, mit einer Lösung von n-Butyloctylmagnesium in n-Heptan versetzt, wobei pro Mol $SiO_2$ 0,3 mol der Magnesiumverbindung eingesetzt wurden. Das feinteilige Kieselgel war zusätzlich durch eine mittlere Teilchengröße der Primärpartikel von 3-5 μm und durch Hohlräume und Kanäle mit einem Durchmesser von 3-5 μm charakterisiert, wobei der makroskopische Volumenanteil der Hohlräume und Kanäle am Gesamtpartikel bei etwa 15 % lag. Die Lösung wurde 45 Minuten bei 95°C gerührt, danach auf 20°C abgekühlt, wonach die 10-fache molare Menge, bezogen auf die magnesiumorganische Verbindung, an Chlorwasserstoff eingeleitet wurde. Nach 60 Minuten wurde das Reaktionsprodukt unter ständigem Rühren mit 3 mol Ethanol pro Mol Magnesium versetzt. Dieses Gemisch wurde 0,5 Stunden bei 80°C gerührt und anschließend mit 7,2 mol Titantetrachlorid und 0,5 mol Di-n-butylpluthalat, jeweils bezogen auf 1 mol Magnesium, versetzt. Anschließend wurde 1 Stunde bei 100°C gerührt, der so erhaltene feste Stoff abfiltriert und mehrmals mit Ethylbenzol gewaschen.

Das daraus erhaltene Festprodukt extrahierte man 3 Stunden lang bei 125°C mit einer 10 vol.-%igen Lösung von Titantetrachlorid in Ethylbenzol. Danach wurde das Festprodukt durch Filtration vom Extraktionsmittel getrennt und solange mit'n-Heptan gewaschen, bis das Extraktionsmittel nur noch 0,3 Gew.-% Titantetrachlorid aufwies.

Die titanhaltige Feststoffkomponente a) enthielt

3,5 Gew.-% Ti

7 , 4 Gew.-% Mg
28,2 Gew. - % Cl.

Neben der titanhaltigen Feststoffkomponente a) wurden als Cokatalysatoren Triethylaluminium und organische Silanverbindungen analog der Lehre der US-A 4 857 613 und der US-A 5 288 824 verwendet.

Beispiel 1

Die Polymerisation wurde in einem vertikal durchmischten Gasphasenreaktor mit einem Nutzvolumen von 200 1, ausgestattet mit einem freitragenden Wendelrührer (87 U/min), durchgeführt. Der Reaktor enthielt ein bewegtes Feststoffbett aus 45 kg feinteiligem Polymerisat. Der Reaktordruck betrug 32 bar. Als Katalysator wurde die titanhaltige Feststoffkomponente a) verwendet.

Zunächst wurde Propylen als Monomeres mit dem Katalysator, d.h. der titanhaltigen Feststoffkomponente a) vermischt. Die Dosierung des Katalysators erfolgte zusammen mit dem zur Druckregelung zugesetzten Frisch-Propylen bei Raumtemperatur. Die zudosierte Katalysatormenge wurde so bemessen, daß der mittlere Ausstoß von 45 kg Polypropylen pro Stunde aufrecht erhalten wurde. Das Katalysator/Propylen-Gemisch wurde über einen Dimplefeeder mit seitlicher Entspannung, Entspannzyklon in der Abgasleitung und getackteter Stickstoffspülung eindosiert. Anschließend wurde die Katalysator/Propylen-Suspension mit Hilfe einer flexiblen Dosierleitung ($d_{innen}$=6 mm) von oben in ein zylindrisches Gefäß (eine Homogenisierungseinrichtung), dessen Innenwände poliert waren, überführt ($d_{innen}$=100 mm, 1=375 mm). Nach der Homogenisierung des getackteten Katalysatorschuß wurde das Propylen/Katalysator-Gemisch kontinuierlich in einen druckstabilen Rohrreaktor mit losem endlos verlegtem Teflonschlauch überführt ($1_{Rohrreaktor}$=100 m, $d_{innen}$ (Teflonschlauch)=6 mm). In den Gasphasenreaktor zudosiert wurde ein Gemisch von Triethylaluminium (in Form einer 1 molaren Heptanlösung) in einer Menge von 135 mmol/h und 13,5 mmol/h Dicyclopentyldimethoxysilan (in Form einer 0,125 molaren Heptanlösung). Zur Molmassenregelung wurde Wasserstoff in den Kreisgaskühler hinzudosiert. Die Wasserstoffkonzentration im Reaktionsgas betrug 3,3 Vol-% und wurde gaschromatographisch ermittelt. Im Rohrreaktor wurde das Gemisch aus Katalysator und Propylen bei einer Temperatur von 20°C, einem Druck von $4.10^6$ Pa (40 bar) und einer mittleren Verweilzeit von 1,6 Minuten kurzzeitig voraktiviert und dann in den Gasphasenreaktor eingespült. Dabei strömte das Gemisch aus Katalysator und Propylen mit einer Reynolds-Zahl von 32400, bezogen auf das Propylen, durch den Rohrreaktor.

Der auf diese Weise voraktivierte Katalysator wurde anschließend zusammen mit dem Propylen in den Gasphasenreaktor überführt und dort polymerisiert.

Die bei der Polymerisation im Gasphasenreaktor entstehende Restwärme wurde durch Verdampfungskühlung abgeführt. Zu diesem Zweck wurde ein Kreisgasstrom, der quantitativ das 4- bis 6-fache der umgesetzten Gasmenge ausmacht, im Kreis geführt. Das verdampfte Propylen wurde nach Passieren der Reaktionszone am Kopf des Reaktors abgezogen, in einem Kreisgasfilter von mitgerissenen Polymerteilchen getrennt und gegen Zweitwasser in einem Wärmetauscher kondensiert. Das kondensierte Kreisgas wurde bis 40°C wieder in den Reaktor zurückgepumpt. Der im Kondensator nicht kondensierbare Wasserstoff wurde abgesaugt und dem flüssigen Kreisgasstrom von unten wieder zugeführt. Die Temperatur im Reaktor wurde über den Kreisgasdurchfluß geregelt und betrug 80°C, der Druck $3,2.10^6$ Pa (32 bar).

Durch kurzzeitiges Entspannen des Reaktors über ein Tauchrohr wurde sukzessive Polymergries aus dem Rektor entfernt. Die Austragsfrequenz wurde über eine radiometrische Füllstandsmessung geregelt. Diese Einstellung wurde insgesamt 75 Stunden stabil gefahren und anschließend kontrolliert abgestellt. Dabei erhielt man ein Propylenhomopolymerisat mit einer Schmelzflußrate (MFR), nach ISO 1133 von 12,2 g/10 min.

Die verfahrenstechischen Parameter im Gasphasenreaktor und charakteristischen Produkteigenschaften des erhaltenen Polymerisats gehen aus der nachstehenden Tabelle I hervor.

Beispiel 2

Die Polymerisation im kontinuierlich betriebenen 200 1 Gasphasenreaktor wurde analog zu Beispiel 1 durchgeführt. Die Katalysatordosierung erfolgte analog zu Beispiel 1. Das Gemisch von Triethylaluminium (in Form einer 1 molaren Haptanlösung) in einer Menge von 135 mmol/h und 13,5 mmol/h Dicyclopentyldimethoxysilan (in Form einer 0,125 molaren Heptanlösung) wurde mit Hilfe einer Injektionseinspülung ($d_{innen}$=2 mm) direkt in den Anfang des Rohrreaktors mit Tefloninlet zudosiert. Hierbei wurde die Frischpropylenmenge so aufgeteilt, daß 80 Massen-% Frischpropylen mit dem Katalysator (titanhaltige Feststoffkomponente a)) und 20 Massen-% Frischpropylen mit den Heptanlösungen von Triethylaluminium und Dicyclopentyldimethoxysilan zusammen in den Rohrreaktor eingespült wurden. Im Rohrreaktor wurde das Gemisch aus Katalysator, Cokatalysator und Propylen mit einer Reynolds-Zahl von ca. 32400 in Richtung auf das Rohrende geleitet und dabei wurde das Propylen vorpolymerisiert. Diese Einstellung wurde über insgesamt 75 Stunden stabil gefahren und anschließend kontrolliert abgestellt. Im Rohrreaktor erfolgte die Vorpolymerisation bei einem Druck von 4. $10^6$ Pa (40 bar) und einer mittleren Verweilzeit von 1,6 Minuten. Der auf diese Weise voraktivierte Katalysator wurde anschließend zusammen mit dem bereits erhaltenen Propylenpolymerisat und dem nicht umgesetzten Propylen in den Gasphasenreaktor überführt und dort weiterpolymerisiert.

Die verfahrenstechnischen Parameter im Gasphasenreaktor und charakteristischen Produkteigenschaften des erhaltenen Polymerisats sind in der nachstehenden Tabelle I aufgeführt.

Vergleichsbeispiel A

Die Polymerisation im kontinuierlich betriebenen 200 1 Gasphasenreaktor wurde analog zu Beispiel 1 durchgeführt. Das Katalysator/ Propylen-Gemisch wurde über einen Dimplefeeder mit seitlicher Entspannung, Zyklon in der Abgasleitung und getackteter Stickstoffspülung seitlich in den Reaktor dosiert. Die Dosierung von Triethylaluminium und Dicyclopenyldimethoxysilan erfolgte direkt in den Gasphasenreaktor.

Im Gegensatz zum Beispiel 1 wurde im Vergleichsbeispiel A auf die kurzzeitige Voraktivierung im Rohrreaktor verzichtet. Die Einstellung wurde insgesamt 75 Stunden stabil gefahren und anschließend kontrolliert abgestellt. Die verfahrenstechnischen Parameter im Gasphasenreaktor und die charakteristischen Produkt-eigenschaften des erhaltenen Polymerisats sind in der nachstehenden Tabelle I aufgeführt.

Tabelle I

| | Beispiel 1 | Beispiel 2 | Vergleichsbeispiel A |
|---|---|---|---|
| Reaktordruck $10^{-5}$ Pa ([bar]) | 32 | 32 | 32 |
| Reaktortemperatur [°C] | 80 | 80 | 80 |
| Rührerumdrehungen [U/min] | 87 | 87 | 87 |
| mittlere Verweilzeit [min] | | | |
| Rohrreaktor | 1,6 | 1,6 | - |
| Gasphasenreaktor | 60 | 60 | 60 |
| Wasserstoff [Vol%] | 3.3 | 3.2 | 3.4 |
| MFR [g/min] | 12.2 | 12.3 | 12.3 |
| Produktivität [gPP/gKat] | 16200 | 22700 | 15500 |
| Polymergriesmorphologie | | | |
| <0,125 mm [%] | 4.0 | 2.1 | 11.4 |
| <0,25 mm [%] | 8.4 | 2.1 | 11.1 |
| <0,5 mm [%] | 20.4 | 9.5 | 21.4 |
| <1,0 mm [%] | 46.7 | 36.1 | 32.8 |
| <2,0 mm [%] | 20.1 | 46.5 | 22.1 |
| >2,0 mm [%] | 0.4 | 0.4 | 1.2 |

Dabei wurde die Schmelzflußrate (MFR) bei 230°C und 2,16 kg nach ISO 1133 und die Polymergrießmorphologie durch Siebanalyse ermittelt. Die Berechnung der Produktivität erfolgte aus dem Chlorgehalt der erhaltenen Polymerisate nach der folgenden Formel:

$$\text{Produktivität (P)} = \text{Cl-Gehalt des Katalysators/Cl-Gehalt des Polymerisates}$$

Die erhaltenen Propylenhomopolymerisate des erfindungsgemäßen Beispiels 2 und des Vergleichsbeispiels A wurden ferner einem Schmelzfiltrationstest unterzogen.

Bei der Schmelzefiltration wird die Polymerschmelze bei 265°C durch ein Sieb mit der Maschenweite 5 µm und einer Oberfläche von 434 $mm^2$ mit Hilfe eines Extruders unter Druck 60 min lang durchgepreßt, so daß der Durchsatz 2 kg/h beträgt. Die Anwesenheit von unaufgeschmolzenen Partikeln und/oder anorganischen Teilchen bewirken bei konstantem Durchsatz eine stetige Erhöhung des gemessenen Massedruckes. Die Ergebnisse der Schmelzefiltration der Polymere aus Beispiel 2 und dem Vergleichsbeispiel A sind in Tabelle II zusammengefaßt.

Tabelle II

| Laufzeit [min] | Massedruck $10^{-5}$ Pa ([bar]) Beispiel 2 | Massedruck $10^{-5}$ Pa ([bar]) Vergleichsbeispiel A |
|---|---|---|
| 5 | 86 | 84 |
| 10 | 86 | 87 |
| 15 | 86 | 90 |
| 20 | 87 | 93 |
| 25 | 87 | 96 |
| 30 | 88 | 99 |
| 35 | 89 | 104 |
| 40 | 89 | 110 |
| 45 | 89 | 119 |
| 50 | 90 | 126 |
| 55 | 91 | 138 |
| 60 | 92 | 147 |

Die Ergebnisse der Schmelzefiltrationstests zeigen, daß man mit dem erfindungsgemäßen Verfahren Polymerisate erhält, die homogener sind als entsprechende Polymerisate, die nach herkömmlichen Verfahren erhalten worden sind.

In den Versuchen der Beispiele 3, 4 und dem Vergleichsbeispiel wurde ein Metallocenkatalysator eingesetzt, der folgendermaßen hergestellt wurde:

0,98 kg (1,7 mol) rac. Dimethylsilylenbis(2-methylbenz[e]indenyl)zirkoniumdichlorid wurden in einem 300 1 Rührbehälter unter Stickstoff vorgelegt und bei Raumtemperatur unter Rühren in 124 kg 1,53 molarer (bezogen auf Al) MAO-Lösung (Fa. Witco; 10 Gew.-% Methylaluminoxan in Toluol) gelöst. Zwei Drittel der auf diese Weise erhaltenen Lösung wurden auf das im Prozeßfilter mit möglichst ebener Oberfläche vorgelegte, chemisch getrocknete Kieselgel innerhalb von 3 h aufgesprüht, wobei der Ablauf des Prozeßfilters geöffnet blieb. Das letzte Drittel der Lösung wurde nicht mehr aufgesprüht, sondern direkt von oben zu der überstehenden Lösung dosiert, ohne den vorgelegten Träger aufzuwirbeln. Nach vollständiger Zugabe der Lösung wurde,der Ablauf geschlossen. Am nächsten Tag wurde der Ablauf wieder geöffnet und die restliche Lösung zunächst drucklos, gegen Ende dann unter leichtem Stickstoffüberdruck, abfiltriert. Der zurückgebliebene Feststoff wurde nach Aufsprühen von 60 1 Pentan 1 h gerührt. Nach dem Abfiltrieren wurde noch zweimal mit je 60 1 Pentan gewaschen und der zurückgebliebene Trägerkatalysator dann im Stickstoffstrom getrocknet (2 h bei 35-40°C Innentemperatur und sehr langsamen Rühren). Die Ausbeute betrug 34,8 kg Metallocen-Trägerkatalysator.

Beispiel 3

Die Polymerisation wurde in einem vertikal durchmischten Gasphasenreaktor mit einem Nutzvolumen von 200 1, ausgestattet mit einem freitragenden Wendelrührer (95 U/min), durchgeführt. Der Reaktor enthielt ein bewegtes Festbett aus 45 kg feinteiligem Polymerisat. Der Reaktordruck betrug 28 bar. Als Katalysator wurde der oben beschriebene Metallocenkatalysator verwendet. Derartige Metallocenkatalysatoren sind in Gegenwart von Monomer bereits polymerisationsaktiv. Die Dosierung des Katalysators erfolgte als Suspension in iso-Dodecan zusammen mit dem vor Druckregelung zugesetzten Frischpropylen bei -5°C. Dem Frischpropylen wurde vor der Katalysatordosierung 20 mmol/h iso-Propanol (in Form einer 0,5 molaren Heptanlösung) zudosiert. Die zudosierte Katalysatormenge wurde so bemessen, daß der mittlere Ausstoß von 20 kg Polyropylen pro Stunde aufrecht erhalten wurde. Das Katalysator/ Frischpropylen-Gemisch wurde über einen Dimplefeeder mit seitlicher Entspannung, Entspannzyklon in der Abgasleitung und getackteter Stickstoffspülung dosiert. Anschließend wurde die Katalysator/Frischpropylensuspension mit Hilfe einer flexiblen Dosierleitung ($D_{innen}$=6 mm) von oben in ein zylindrisches Gefäß, dessen Innenwände poliert waren, überführt ($d_{innen}$=100 mm; 1=375 mm). Nach der Homogenisierung des getackteten Katalysatorschuß wurde das Propylen/Katalysatorgemisch kontinuierlich in einen druckstabilen Rohrreaktor mit losem endlos verlegtem Teflonschlauch überführt ($1_{Rohrreaktor}$=50 m, $d_{innen}$(Teflonschlauch)=6 mm). In den Gasphasenreaktor zudosiert wurde Triisobutylaluminium (in Form einer 2

molaren Heptanlösung) in einer Menge von 60 mmol/h.

Im Rohrreaktor wurde das Propylen/Katalysator-Gemisch bei einer Temperatur von -5°C einem Druck von $38x10^5$ Pa (38 bar) und einer mittleren Verweilzeit von 1,5 Minuten in den Gasphasenreaktor eingespült und vorpolymerisiert. Dabei strömte das Gemisch aus Katalysator und Propylen mit einer Reynoldszahl von ca. 17 500, bezogen auf das Propylen, durch den Rohrreaktor.

Der auf diese Weise voraktivierte Katalysator wurde anschließend zusammen mit dem bereits erhaltenen Propylenpolymerisat und dem nicht umgesetzten Propylen in den Gasphasenreaktor überführt und dort weiterpolymerisiert.

Die bei der Polymerisation entstehende Reaktionswärme wurde durch Verdampfungskühlung abgeführt. Zu diesem Zweck wurde eine Kreisgasstrom, der quantitativ das 4- bis 6-fache der umgesetzten Gasmenge ausmacht, im Kreis geführt. Das verdampfte Propylen wurde nach Passieren der Reaktionszone am Kopf des Reaktors abgezogen, in einem Kreisgasfilter von mitgerissenen Polymerteilchen getrennt und gegen Zweitwasser in einem Wärmetauscher kondensiert. Das kondensierte Kreisgas wurde bei 40°C wieder in den Reaktor zurückgepumpt. Die Temperatur im Reaktor wurde über den Kreisgasdurchfluß geregelt und betrug 70°C.

Durch kurzzeitiges Entspannen des Reaktors über ein Tauchrohr wurde sukzessive Polymergries aus dem Reaktor entfernt. Die Austragsfrequenz wurde über eine radiometrische Füllstandsmenge geregelt. Diese Einstellung wurde über insgesamt 75 Stunden stabil gefahren und anschließend kontrolliert abgestellt.

Die verfahrenstechnischen Parameter im Gasphasenreaktor und die charakteristischen Produkteigenschaften des erhaltenen Polymerisats sind in der nachstehenden Tabelle III aufgeführt.

Beispiel 4

Die Polymerisation im kontinuierlichen 200 1 Gasphasenreaktor wurde analog zu Beispiel 3 durchgeführt. Die Katalysatordosierung erfolgte analog zu Beispiel 3. Triisobutylaluminium (in Form einer 2 molaren Heptanlösung) in einer Menge von 60 mmol/h wurde mit Hilfe einer Injektionseinspülung ($d_{innen}$=2 mm) direkt in den Anfang des Rohrreaktors mit Tefloninlet zudosiert. Hierbei wurde die Frischpropylenmenge so aufgeteilt, daß 80-Massen% Frischpropylen mit dem Katalysator und 20 Massen% Frischpropylen mit der Triisobutylaluminium-Heptan Lösung zusammen in den Rohrreaktor eingespült wurden.

Diese Einstellung wurde über insgesamt 75 Stunden stabil gefahren und anschließend kontrolliert abgestellt. Der auf diese Weise voraktivierte Katalysator wurde anschließend zusammen mit dem bereits erhaltenen Propylenpolymerisat und dem nicht umgesetzten Propylen in den Gasphasenreaktor überführt und dort weiterpolymerisiert.

Die verfahrenstechnischen Parameter im Gasphasenreaktor und die charakteristischen Produkteigenschaften des erhaltenen Polymerisats sind in der nachstehenden Tabelle III aufgeführt.

Vergleichsbeispiel B

Die Polymerisation im kontinuierlichen 200 l Gasphasenreaktor wurde analog zu Beispiel 3 und Beispiel 4 durchgeführt. Das Katalysator/Frischpropylen/iso-Propanol-Gemisch wurde über einen Dimplefeeder mit seitlicher Entspannung, Zyklon in der Abgasleitung' und getackteter Stickstoffspülung seitlich in den Reaktor dosiert. Die Dosierung von Triisobutylaluminium erfolgte analog zu Beispiel 3.

Diese Einstellung wurde über insgesamt 75 Stunden stabil gefahren und anschließend kontrolliert abgestellt. Im Gegensatz zum Beispiel 3 wurde im Vergleichsbeispiel B auf die Voraktivierung im Rohrreaktor verzichtet.

Die verfahrenstechnischen .Parameter und die charakteristischen Produkteigenschaften des erhaltenen Polymerisats sind in der nachstehenden Tabelle III aufgeführt.

| | Beispiel 3 | Beispiel 4 | Vergleichsbeispiel B |
|---|---|---|---|
| Reaktordruck $10^{-5}$ Pa ([bar]) | 28 | 28 | 28 |
| Reaktortemperatur [°C] | 70 | 70 | 70 |
| Rührerumdrehungen [U/min] | 95 | 95 | 95 |
| MFR [g/min] | 7.4 | 7.2 | 8.4 |
| Produktivität [gPP/Kat] | 7800 | 9100 | 6900 |
| Polymergriesmorphologie: | | | |
| <0,125 mm [%] | 0,1 | 0,2 | 0,3 |

(fortgesetzt)

| | Beispiel 3 | Beispiel 4 | Vergleichsbeispiel B |
|---|---|---|---|
| <0,25 mm [%] | 0,5 | 0,6 | 0,6 |
| <0,5 mm [%] | 4,6 | 8,0 | 3,6 |
| <1,0 mm [%] | 25,4 | 11,5 | 38,0 |
| <2,0 mm [%] | 64,1 | 76,8 | 48,4 |
| >2,0 mm [%] | 5,3 | 2,9 | 9,1 |

Dabei wurde die Schmelzflußrate (MFR) bei 230°C und 2,16 kg nach ISO 1133 und die Polymergrießmorphologie durch Siebanalyse ermittelt. Die Berechnung der Produktivität erfolgte aus dem Chlorgehalt der erhaltenen Polymerisate nach der folgenden Formel:

```
Produktivität (P) =   Cl-Gehalt des Katalysators/
                      Cl-Gehalt des Polymerisats
```

## Patentansprüche

1. Verfahren zur Voraktivierung von Katalysatoren zur Polymerisation von $C_2$-$C_{20}$-Olefinen, wobei man zunächst den Katalysator mit dem jeweiligen Monomer vermischt, danach gegebenenfalls den jeweiligen Cokatalysator hinzufügt und das **dadurch** erhaltene Gemisch anschließend in einem Rohrreaktor einer Voraktivierung unterwirft und schließlich den auf diese Weise voraktivierten Katalysator in den eigentlichen Polymerisationsreaktor einführt, **dadurch gekennzeichnet, daß** das Gemisch aus Katalysator, gegebenenfalls Cokatalysator und Monomer in Form einer turbulenten Pfropfenströmung mit einer Reynoldszahl von mindestens 2300 durch den Rohrreaktor geleitet wird.

2. Verfahren nach Anspruch 1, **dadurch gekennzeichnet, daß** das Gemisch aus Katalysator, gegebenenfalls Cokatalysator und Monomer in Form einer turbulenten Pfropfenströmung mit einer Reynoldszahl von mindestens 5000 durch den Rohrreaktor geleitet wird.

3. Verfahren nach Anspruch 1 oder 2, **dadurch gekennzeichnet, daß** der eingesetzte Rohrreaktor innen ein glattes, endloses Inletrohr ohne Nähte enthält.

4. Verfahren nach den Ansprüchen 1 bis 3, **dadurch gekennzeichnet, daß** das Gemisch durch den Rohrreaktor bei Temperaturen von -25 bis 150°C, Drücken von $10^5$ bis $10^7$ Pa (1 bis 100 bar) und mittleren Verweilzeiten von 1 bis. 5 Minuten durchgeleitet wird.

5. Verfahren nach den Ansprüchen 1 bis 4, **dadurch gekennzeichnet, daß** es zur Herstellung von Homopolymerisaten des Propylens verwendet wird.

6. Verfahren nach den Ansprüchen 1 bis 5, **dadurch gekennzeichnet, daß** es zur Herstellung von Copolymerisaten des Propylens mit Anderer olefine mit bis zu 10 C-Atomen.

7. Verfahren nach den Ansprüchen 1 bis 6, **dadurch gekennzeichnet, daß** das Gemisch aus Katalysator, Monomer und Cokatalysator im Rohrreaktor einer Vorpolymerisation unterworfen wird.

8. Verfahren nach den Ansprüchen 1 bis 7, **dadurch gekennzeichnet, daß** die Polymerisation der $C_2$-$C_{20}$-Olefine mittels eines Ziegler-Natta-Katalysators durchgeführt wird, welcher neben einer titanhaltigen Feststoffkomponente a) noch Cokatalysatoren in Form von organischen Aluminiumverbindungen b) und Elektronendonorverbindungen c) aufweist.

9. Verfahren nach den Ansprüchen 1 bis 8, **dadurch gekennzeichnet, daß** die Polymerisation der $C_2$-$C_{20}$-Olefine

mittels eines Ziegler-Natta-Katalysators auf der Basis von Metallocenverbindungen oder von polymerisationsaktiven Metallkomplexen durchgeführt wird.

10. Verfahren nach den Ansprüchen 1 bis 9, **dadurch gekennzeichnet, daß** als eigentlicher Polymerisationsreaktor ein vertikaler, gerührter Pulverbettreaktor verwendet wird.

## Claims

1. A process for the pre-activation of catalysts for the polymerisation of $C_2$-$C_{20}$ olefins, wherein the catalyst is initially mixed with the respective monomer, the respective co-catalyst, if necessary, is subsequently added, and the mixture thus obtained is subsequently subjected to a pre-activation in a tubular reactor and eventually the catalyst pre-activated in this way is introduced into the actual polymerisation reactor, **characterised in that** the mixture of catalyst, where necessary co-catalyst and monomer is conducted through the tubular reactor in the form of a turbulent plug flow with a Reynolds number of at least 2300.

2. The process according to claim 1, **characterised in that** the mixture of catalyst, where necessary co-catalyst and monomer is conducted in the form of a tubular plug stream with a Reynolds number of at least 5000 through the tubular reactor.

3. The process according to claim 1 or 2, **characterised in that** the tubular reactor used contains inside a smooth, endless, seamless inlet tube.

4. The process according to claims 1 to 3, **characterised in that** the mixture is conducted through the tubular reactor at temperatures of -25 to 150°C, pressures of $10^5$ to $10^7$ Pa (1 to 100 bar) and average residence times of 1 to 5 minutes.

5. The process according to claims 1 to 4, **characterised in that** the process is used for the production of homopolymers of propylene.

6. The process according to claims 1 to 5, **characterised in that** the process is used for the production of copolymers of propylene with other olefins with up to 10 C atoms.

7. The process according to claims 1 to 6, **characterised in that** the mixture of catalyst, monomer and co-catalyst is subjected to a pre-polymerisation in the tubular reactor.

8. The process according to claims 1 to 7, **characterised in that** the polymerisation of the $C_2$-$C_{20}$ olefins is carried out by means of a Ziegler-Natta catalyst which, apart from a titanium-containing solid component a) further comprises co-catalysts in the form of organic aluminium compounds b) and electron donor compounds c).

9. The process according to claims 1 to 8, **characterised in that** the polymerisation of the $C_2$-$C_{20}$ olefins is carried out by means of a Ziegler-Natta catalyst based on metallocene compounds or polymerisation-active metal complexes.

10. The process according to claims 1 to 9, **characterised in that** a vertical stirred powder bed reactor is used as the actual polymerisation reactor.

## Revendications

1. Procédé de préactivation de catalyseurs pour la polymérisation d'oléfines $C_2$-$C_{20}$, dans lequel on mélange d'abord le catalyseur au respectif monomère, on ajoute ensuite, le cas échéant, le respectif co-catalyseur puis on soumet le mélange ainsi obtenu à une préactivation dans un réacteur tubulaire et enfin on introduit le catalyseur préactivé de cette façon dans le réacteur de polymérisation proprement dit, **caractérisé en ce que** le mélange de catalyseur, le cas échéant de co-catalyseur et de monomère est conduit sous forme d'un écoulement piston turbulent ayant un nombre de Reynolds d'au moins 2300 dans le réacteur tubulaire.

2. Procédé selon la revendication 1, **caractérisé en ce que** le mélange de catalyseur, le cas échéant de co-catalyseur et de monomère est conduit sous forme d'un écoulement piston turbulent ayant un nombre de Reynolds d'au moins

5000 dans le réacteur tubulaire.

3. Procédé selon la revendication 1 ou 2, **caractérisé en ce que** le réacteur tubulaire utilisé contient à l'intérieur un tuyau d'arrivée continu lisse sans cordons de soudure.

4. Procédé selon les revendications 1 à 3, **caractérisé en ce que** le mélange est conduit dans le réacteur tubulaire à des températures de - 25 à 150° C, sous des pressions de $10^5$ à $10^7$ Pa (1 à 100 bar) et avec des temps de séjour moyens de 1 à 5 minutes.

5. Procédé selon les revendications 1 à 4, **caractérisé en ce qu'**il est usé pour la fabrication d'homopolymérisats de propylène.

6. Procédé selon les revendications 1 à 5, **caractérisé en ce qu'**il est usé pour la fabrication de copolymérisats de propylène avec des autres oléfines contenant jusqu'à 10 atomes de C.

7. Procédé selon les revendications 1 à 6, **caractérisé en ce que** le mélange de catalyseur, de monomère et de co-catalyseur est soumis à une prépolymérisation dans le réacteur tubulaire.

8. Procédé selon les revendications 1 à 7, **caractérisé en ce que** la polymérisation des oléfines $C_2$-$C_{20}$ est réalisée au moyen d'un catalyseur Ziegler-Natta qui, outre un composant de matière solide contenant du titane a), comporte aussi des co-catalyseurs sous forme de composés organiques d'aluminium b) et de composés donneurs d'électrons c).

9. Procédé selon les revendications 1 à 8, **caractérisé en ce que** la polymérisation des oléfines $C_2$-$C_{20}$ est réalisée au moyen d'un catalyseur Ziegler-Natta à partir de composés de métallocène ou de complexes métalliques actifs au niveau polymérisation.

10. Procédé selon les revendications 1 à 9, **caractérisé en ce qu'**on utilise comme réacteur de polymérisation proprement dit un réacteur à lit de poudre vertical agité.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 45977 B
- EP 171200 A
- US 4857613 A
- US 5288824 A
- WO 9733920 A
- WO 9522565 A
- EP 574821 A
- EP 560312 A
- WO 9855519 A
- EP 279153 A
- EP 45975 A
- EP 45977 A
- EP 86473 A
- GB 2111066 A
- DE 19529240 A
- EP 000512 B
- EP 031417 B
- EP 038478 B